# FASCICULE DE BREVET EUROPEEN

(11) **EP 1 170 156 B1**
(45) Date de publication et mention de la délivrance du brevet: **25.08.2004**
(21) Numéro de dépôt: 01401502.8
(22) Date de dépôt: 11.06.2001
(51) Int. Cl.: B60G 7/00, B60G 21/05, B60G 21/055

(54) **Train arrière pour véhicule automobile du type à bras tirés longitudinaux avec des barres de maintien ou de guidage transversal**
Hinterradaufhängung mit Schwingarm für ein Kraftfahrzeug mit Querführungsstreben
Trailing arm rear suspension for a motor vehicle with transverse guide bars

(30) Priorité: 14.06.2000 FR 0007575
(43) Date de publication de la demande: 09.01.2002
(73) Titulaire: Peugeot Citroen Automobiles SA, 92200 Neuilly sur Seine (FR)
(72) Inventeur: Nicolas, Daniel, 78360 Montesson (FR)
(74) Mandataire: Thinat, Michel

(56) Documents cités:
- DE-A- 2 249 006
- DE-A- 3 842 339
- FR-A- 2 738 190
- US-A- 5 924 711
- PATENT ABSTRACTS OF JAPAN vol. 016, no. 576 (M-1345), 16 décembre 1992 (1992-12-16) & JP 04 224413 A (NISSAN MOTOR CO LTD), 13 août 1992 (1992-08-13)

## Description

La présente invention concerne un train arrière pour véhicule automobile du type à deux bras tirés longitudinaux.

Selon un tel train arrière, les deux bras tirés de support des fusées de roues sont reliés entre eux par une traverse tubulaire dont le corps est fixé à la caisse du véhicule par deux pattes avant et deux pattes arrière solidaires du corps et reliées à la caisse par des articulations élastiques sous forme de cales. Chaque bras tiré est monté pivotant à l'extrémité correspondante de la traverse autour d'un axe transversal par l'intermédiaire d'un roulement à aiguilles pour permettre un débattement dans le plan vertical de chaque roue arrière.

La conception de ce train arrière rend difficile d'empêcher des braquages induits du train sous des efforts transversaux importants à cause de l'élasticité des cales de liaison des bras tirés à la caisse et surtout à cause de la déformation des supports de roue, en particulier des bras tirés eux-mêmes.

Ainsi, le problème que cherche à résoudre l'invention réside dans l'élimination des moments de flexion sur les bras tirés du train arrière dans le cas d'efforts transversaux sévères appliqués à celui-ci.

Pour résoudre ce problème, l'invention propose un train arrière pour véhicule automobile, comprenant deux bras tirés longitudinaux de support des fusées de roues reliés entre eux par une traverse fixée à la caisse du véhicule par des pattes avant et arrière solidaires de la caisse par des articulations élastiques et montés pivotant à l'extrémité correspondante de la traverse autour d'un axe transversal et qui est caractérisé en ce qu'il comprend une barre transversale rigide fixée rigidement à ses extrémités à la caisse et située entre la caisse et le train ; et deux barres de maintien sensiblement transversales, dont chacune a une extrémité fixée à la barre transversale rigide par une articulation et son extrémité opposée fixée au pivot de roue correspondant par une articulation, chaque barre de maintien étant agencée de façon à avoir une longueur variable suivant les débattements verticaux de la roue en attaque et en détente.

Selon un premier mode de réalisation, chaque barre de maintien comprend à sa partie d'extrémité reliée à la barre transversale rigide, deux éléments télescopiques externe et interne comprenant respectivement deux butées d'extrémité transversales fixes entre lesquelles est en appui un organe élastique pouvant se comprimer axialement lorsque la roue débat verticalement en attaque.

Selon une variante de réalisation, l'organe élastique est un ressort hélicoïdal de compression.

Selon une autre variante de réalisation, l'organe élastique est un bloc de caoutchouc tronconique solidaire de la butée d'extrémité de l'élément télescopique interne.

L'élément télescopique externe de chaque barre de maintien est relié à son extrémité à la barre transversale rigide par l'articulation correspondante qui est élastique ou à rotule.

Selon un second mode de réalisation, l'articulation reliant chaque barre de maintien à la barre transversale rigide est élastique et comprend un manchon à base de caoutchouc à axe longitudinal parallèle à l'axe longitudinal du véhicule et ayant deux cavités internes diamétralement opposées permettant une déformation radiale du manchon lors des débattements verticaux de la roue.

Avantageusement, les cavités présentent chacune en section transversale la forme d'une lumière arquée.

Chaque barre de maintien est reliée à la barre transversale rigide par une chape solidaire de la barre transversale sous celle-ci dans un plan approximativement vertical.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels
- la figure 1 est une vue en perspective d'un train arrière pour véhicule automobile conforme à l'invention ;
- la figure 2 est une vue en coupe représentant la fixation d'une extrémité de la traverse rigide faisant partie du train de la figure 1 ;
- la figure 3 est une vue partielle en coupe agrandie de la partie d'extrémité de l'une des deux barres de maintien suivant un premier mode de réalisation de l'invention utilisées dans le train arrière de la figure 1 ;
- la figure 4 est une vue partielle de dessus suivant la flèche IV de la figure 3 ;
- la figure 5 représente schématiquement les différents débattements verticaux des roues arrière du véhicule pour expliquer le fonctionnement du train arrière conforme à l'invention ;
- la figure 6 est une vue partielle en coupe semblable à celle de la figure 3 et représentant une variante de réalisation de la barre de maintien de l'invention ;
- la figure 7 est une vue en coupe agrandie suivant un second mode de réalisation de l'articulation de l'extrémité d'une barre de maintien conforme à l'invention ; et
- la figure 8 est une vue de dessus suivant la flèche VIII de la figure 7.

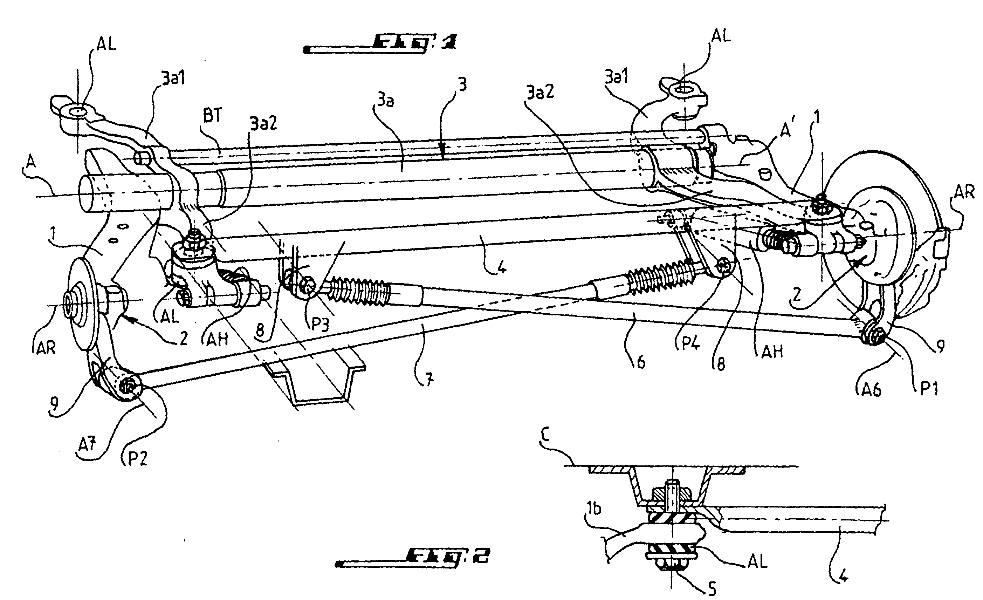

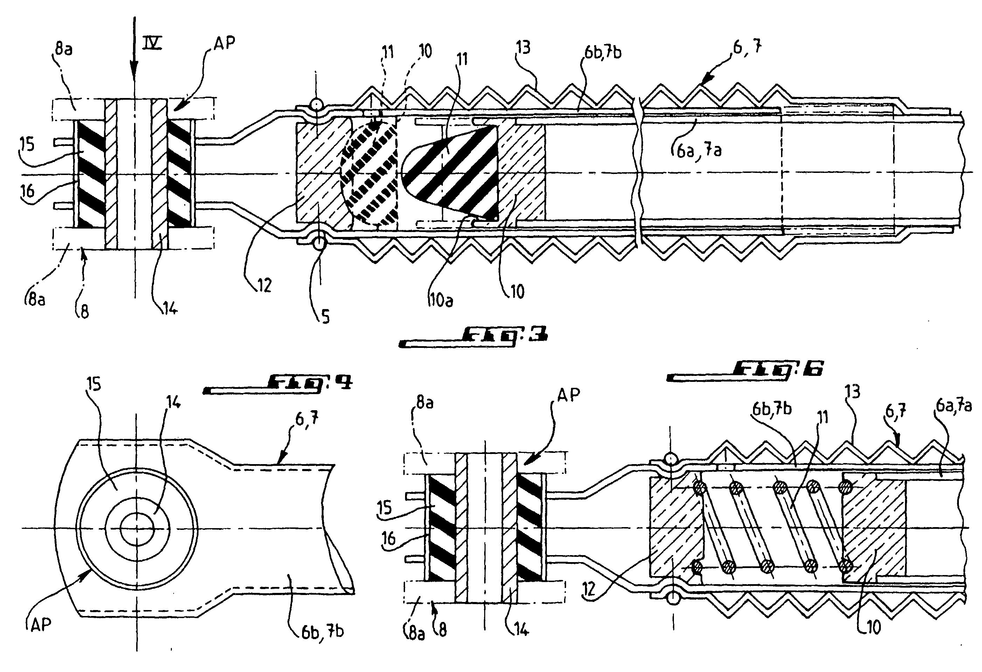

En se reportant aux figures 1 et 2, le train arrière pour véhicule automobile comprend deux bras tirés longitudinaux opposés 1 de support des fusées 2 des roues arrière du véhicule et qui sont reliés entre eux par une tubulaire 3 dont le corps 3a est fixé à la caisse C du véhicule par deux pattes avant 3a1 et deux pattes arrière 3a2 solidaires du corps 3a pour former un cadre fixe et reliées à la caisse C par des articulations élastiques AL sous forme de cales. Chaque bras tiré 1 est monté pivotant à l'extrémité correspondante de la traverse 3 autour d'un axe transversal par l'intermédiaire d'un roulement à aiguilles (non représenté) pour permettre un débattement dans le plan vertical de chaque roue arrière.

Le train arrière comprend en outre deux barres transversales déformables en torsion BT, dont une seule est représentée, et situées de part et d'autre de la traverse tubulaire 3. L'une des barres BT a une extrémité ancrée dont l'une correspondante des pattes avant 3a1 ou arrière 3a2 et son extrémité opposée ancrée dans une partie d'extrémité solidaire du corps 3a de la traverse 3, tandis que l'autre barre BT a une extrémité ancrée dans l'autre patte arrière 3a2 ou avant 3a1 et son extrémité opposée ancrée dans une partie d'extrémité solidaire du corps 3a de la traverse 3 à l'opposé de la première partie d'extrémité d'ancrage de la première barre BT.

Un amortisseur hydraulique à double effet AH est interposé entre l'extrémité de chaque patte arrière 1b et le bras tiré correspondant 1.

Selon l'invention, le train arrière comprend en outre une barre transversale rigide 4, qui peut être tubulaire, fixée rigidement à chacune de ses extrémités à la caisse C du véhicule par un boulon de fixation 5 fixant également l'extrémité correspondante de la patte arrière 1b par l'articulation élastique AL, la barre 4 étant disposée entre la caisse C et le train arrière.

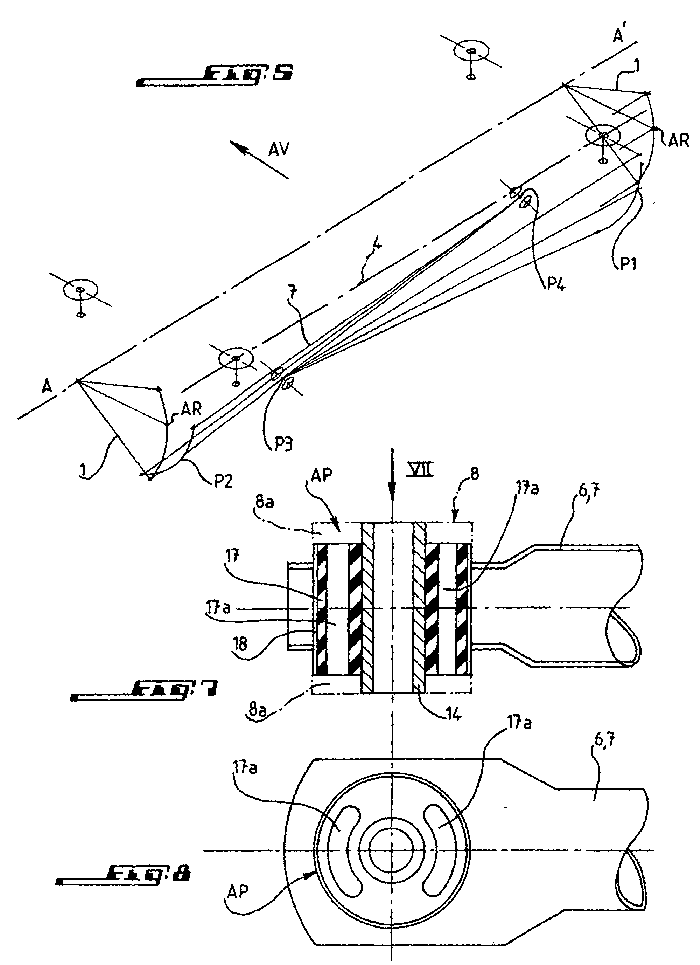

Ce train comprend également deux barres dites de maintien 6, 7 sensiblement transversales à l'axe longitudinal du véhicule et dont chacune a une extrémité fixée à la barre transversale rigide 4 par une articulation AP, qui sera décrite en liaison avec chacun des deux modes de réalisation aux figures 3, 4 et 6, 7, et une chape 8 solidaire de la barre 4 en faisant saillie en dessous de celle-ci dans un plan approximativement vertical.

L'autre extrémité de chaque barre de maintien 6, 7 est fixée au pivot de la roue arrière correspondante par une articulation d'axe longitudinal A6 et A7 fixée à l'extrémité d'un étrier 9 solidaire du pivot de roue.

Chaque barre de maintien 6, 7 est agencée de façon à avoir une longueur variable suivant les débattements verticaux en attaque et en détente de la roue arrière correspondante et est inclinée de haut en bas à partir de son point d'ancrage P3, P4 à la barre 4.

Selon le premier mode de réalisation représenté aux figures 3 et 4, chaque barre de maintien 6, 7 comprend à sa partie d'extrémité reliée à la barre transversale rigide 4 deux éléments tubulaires télescopiques respectivement interne 6a, 7a et externe 6b, 7b de façon à faire varier la distance entre le point d'ancrage P1, P2 de la barre de maintien 6, 7 à l'étrier 9 du pivot de roue correspondant et le point d'ancrage P3, P4 de l'extrémité opposée de la barre de maintien 6, 7 à la chape correspondante 8. Le point d'ancrage P3, P4 peut être une vis excentrique pour régler l'effort sur le plan de roue.

L'extrémité du tube télescopique interne 6a, 7a de la barre de maintien est obstruée par un bouchon cylindrique 10 emmanché à force dans le tube 6a, 7a et qui comporte un lamage 10a de réception de la base d'un bloc tronconique 11 en matériau à base de caoutchouc pouvant se déformer axialement par compression.

L'extrémité du tube télescopique externe 6b, 7b de la barre de maintien 6, 7 est également fermée par une butée cylindrique 12 située en face du bouchon 10 avec interposition du bloc en caoutchouc 11 pour permettre au bloc 11 de venir en appui sur la butée 12 et se déformer axialement par compression comme représenté en pointillés en figure 3 lorsque chaque roue arrière débat en attaque dans un plan vertical.

La butée cylindrique 12 est maintenue dans l'extrémité correspondante du tube externe 6b, 7b par un sertissage S de ce tube.

Les deux tubes télescopiques 6a, 7a et 6b, 7b sont rendus étanches de l'extérieur par un manchon externe en forme de soufflet 13.

L'extrémité du tube externe 6b, 7b prolongeant celle de réception de la butée 12 est aplatie pour constituer une partie de plus faible épaisseur supportée par l'axe 14 de la chape 8 par l'intermédiaire d'une articulation élastique 15 constituée par un manchon en caoutchouc solidaire de l'axe 14 entre les deux branches 8a de la chape 8. Le manchon 15 est également fixé dans un fourreau métallique 16 fixé à l'extrémité aplatie du tube externe 6b, 7b transversalement à celle-ci.

Le manchon 15 peut être fixé à l'axe 14 et au fourreau 16 par un adhésif.

Selon une variante, l'articulation AP peut être du type à rotule.

La variante de réalisation représentée en figure 6 ne diffère de celle de la figure 3 que par la présence d'un ressort hélicoïdal de compression 11 remplaçant le bloc en caoutchouc et interposé entre les deux butées extrêmes 10 et 12.

La figure 5 représente de façon schématique les débattements des roues arrière et donc des bras tirés 1 autour de l'axe de rotation A-A' et symbolisés par les points AR à partir de la position de référence 0. Ainsi, chaque roue arrière débat de la position "attaque" (1) à la position "détente" (2) autour de l'axe A-A' et les points d'ancrage P1 et P2, qui sont solidaires des roues arrière, subissent ces débattements comme symbolisé en (1') et (2') de part et d'autre de la position de référence (0') du point P1, P2. Les déplacements des points P1 et P2 entraînent une variation de longueur des droites P3, P1 et P2, P4 qui symbolisent respectivement les deux barres de maintien 6, 7. Ainsi, chaque barre de maintien 6, 7 suit le plus près possible le trajet théorique du bras tiré correspondant 1 dans la partie "roulage normal" et "attaque" où les effets de la force centrifuge s'exercent dans le sens de la compression de la barre 6, 7 et seront donc pris directement par celle-ci grâce à sa partie télescopique dont le tube interne 6a, 7a se déplacera dans le tube externe 6b, 7b vers la butée 12 de façon à comprimer axialement le bloc en caoutchouc 11 sur celle-ci.

Par contre, dans la partie "détente" du trajet théorique de chaque bras tiré 1, chaque point d'ancrage P1, P2 va tirer la barre de maintien correspondante 6, 7 dans un sens d'allongement de celle-ci, c'est-à-dire que le tube interne 6a, 7a de la partie télescopique de la barre de maintien se déplacera dans le tube externe 6b, 7b en s'éloignant de la butée 12.

La configuration télescopique des parties d'extrémités des deux barres de maintien 6, 7 permet donc de maîtriser le plan de roue arrière pour diminuer le braquage induit par les efforts transversaux et garantit une bonne épure du parallélisme des roues.

Le second mode de réalisation représenté aux figures 6 et 7 assure la même fonction que le premier mode de réalisation ci-dessus et va être maintenant décrit.

Selon ce second mode de réalisation, l'articulation AP reliant l'extrémité de chaque barre de maintien 6, 7 à la chape 8 comprend un manchon en caoutchouc 17 monté sur l'axe transversal 14 de la chape 8 coaxialement à celui-ci et logé dans un fourreau métallique 18 solidaire de l'extrémité aplatie de la barre de maintien 6, 7 transversalement à celle-ci. Le manchon 17 est logé entre les deux branches 8a de la chape 8 et a ainsi son axe longitudinal parallèle à l'axe longitudinal du véhicule.

Chaque manchon 17 comprend deux cavités internes diamétralement opposées 17a s'étendant dans une direction parallèle à l'axe longitudinal du manchon et chacune en forme de lumière arquée. Les deux cavités 17a permettent une déformation radiale du manchon 17 par compression lorsque la roue arrière correspondante débat en attaque où les effets de la force centrifuge s'exercent dans le sens de la compression de la barre de maintien correspondante 6, 7.

L'invention propose ainsi deux solutions qui permettent de reprendre en appui la totalité des efforts transversaux exercés sur le train arrière et qui passent directement sur la caisse sans solliciter les éléments du train arrière en déformation, c'est-à-dire les bras tirés et/ou les cales de liaison de ceux-ci à la caisse du véhicule.

L'allongement de chaque barre de maintien vers la détente permet de libérer les contraintes internes, qui autrement interdiraient le libre débattement du train arrière.

## Revendications

1. Train arrière pour véhicule automobile, comprenant deux bras tirés longitudinaux (1) de support des roues arrière reliés entre eux par une traverse (3) fixée à la caisse (C) du véhicule par deux pattes avant (3a1) et deux pattes arrière (3a2) solidaires de la caisse (C) par des liaisons élastiques (AL) et montés pivotant à l'extrémité correspondante de la traverse (3) autour d'un axe transversal, **caractérisé en ce qu'**il comprend une barre transversale rigide (4) fixée rigidement à ses extrémités à la caisse (C) et située entre la caisse (C) et le train ; et deux barres de maintien sensiblement transversales (6, 7) dont chacune a une extrémité fixée à la barre transversale rigide (4) par une articulation et son extrémité opposée fixée au pivot de roue correspondant (9) par une articulation (AP), chaque barre de maintien (6, 7) étant agencée de façon à avoir une longueur variable suivant les débattements verticaux de la roue en attaque et en détente.

2. Train arrière selon la revendication 1, **caractérisé en ce que** chaque barre de maintien (6, 7) comprend à sa partie d'extrémité reliée à la barre transversale rigide (4), deux éléments télescopiques (6, 7a ; 6b, 7b) externe et interne comprenant respectivement deux butées d'extrémité transversales fixes (10, 13) entre lesquelles est en appui un organe élastique(11) pouvant se comprimer axialement lorsque la roue débat verticalement en attaque.

3. Train arrière selon la revendication 2, **caractérisé en ce que** l'organe élastique (11) est un ressort hélicoïdal de compression.

4. Train arrière selon la revendication 2, **caractérisé en ce que** l'organe élastique (11) est un bloc de caoutchouc tronconique solidaire de la butée d'extrémité de l'élément télescopique interne (6a, 7a).

5. Train arrière selon l'une des revendications 2 à 4, **caractérisé en ce que** l'élément télescopique externe (6b, 7b) de chaque barre de maintien (6, 7) est relié à son extrémité à la barre transversale rigide (4) par l'articulation correspondante qui est élastique ou à rotule.

6. Train arrière selon la revendication 1, **caractérisé en ce que** l'articulation (AP) reliant chaque barre de maintien (6, 7) à la barre transversale rigide (4) est élastique et comprend un manchon à base de caoutchouc (8) à axe longitudinal parallèle à l'axe longitudinal du véhicule et ayant deux cavités internes diamétralement opposées (17a) permettant une déformation radiale du manchon (8) lors des débattements verticaux de la roue.

7. Train arrière selon la revendication 6, **caractérisé en ce que** les cavités (17a) présentent chacune en section transversale la forme d'une lumière arquée.

8. Train arrière selon l'une des revendications précédentes, **caractérisé en ce que** chaque barre de maintien (6, 7) est reliée à la barre transversale rigide (4) par une chape (8) solidaire de la barre transversale (4) sous celle-ci dans un plan approximativement vertical.

## Patentansprüche

1. Hinterradaufhängung für Kraftfahrzeuge, mit zwei gezogenen Längslenkern (1) zum Abstützen der Hinterräder, die über einen Querträger (3) miteinander verbunden sind, der am Fahrzeugaufbau (C) über zwei vordere Laschen (3a1) und zwei hintere Laschen (3a2) befestigt ist, welche über elastische Verbindungen (AL) fest mit dem Fahrzeugaufbau (C) verbunden sind, und die um eine Querachse schwenkbeweglich am entsprechenden Ende des Querträgers (3) gelagert sind, **dadurch gekennzeichnet, dass** sie einen starren Querstab (4) enthält, der mit seinen Enden starr am Fahrzeugaufbau (C) befestigt ist und zwischen dem Fahrzeugaufbau (C) und der Radaufhängung liegt, und mit zwei im wesentlichen querverlaufenden Haltestäben (6, 7), von denen jeder mit einem Ende am starren Querstab (4) über ein Gelenk und mit seinem gegenüberliegenden Ende am entsprechenden Radzapfen (9) über ein Gelenk (AP) befestigt ist, wobei jeder Haltestab (6, 7) so angeordnet ist, dass er je nach senkrechten Ein- und Ausfederungen des Rads bei Beaufschlagung und Entspannung eine veränderliche Länge hat.

2. Hinterradaufhängung nach Anspruch 1, **dadurch gekennzeichnet, dass** jeder Haltestab (6, 7) an seinem mit dem starren Querstab (4) verbundenen Endbereich zwei Teleskopelemente (6a, 7a; 6b, 7b) enthält, und zwar ein äußeres und ein inneres, die jeweils einen festen Querendanschlag (10, 13) enthalten, zwischen denen sich ein Federglied (11) abstützt, das axial zusammengedrückt werden kann, wenn das Rad unter Beaufschlagung senkrecht einfedert.

3. Hinterradaufhängung nach Anspruch 2, **dadurch gekennzeichnet, dass** das Federglied (11) eine spiralförmige Druckfeder ist.

4. Hinterradaufhängung nach Anspruch 2, **dadurch gekennzeichnet, dass** das Federglied (11) ein kegelstumpfförmiger Gummiblock ist, der fest mit dem Endanschlag des inneren Teleskopelements (6a, 7a) verbunden ist.

5. Hinterradaufhängung nach einem der Ansprüche 2 bis 4, **dadurch gekennzeichnet, dass** das äußere Teleskopelement (6b, 7b) eines jeden Haltestabs (6, 7) an seinem Ende mit dem starren Querstab (4) über das entsprechende Gelenk verbunden ist, das ein elastisches Gelenk oder Kugelgelenk ist.

6. Hinterradaufhängung nach Anspruch 1, **dadurch gekennzeichnet, dass** das jeden Haltestab (6, 7) mit dem starren Querstab (4) verbindende Gelenk (AP) elastisch ist und eine Hülse auf Gummibasis (8) mit parallel zur Längsachse des Fahrzeugs verlaufender Längsachse und mit zwei diametral gegenüberliegenden Innenhohlräumen (17a) enthält, die eine radiale Verformung der Hülse (8) bei senkrechten Ein-/Ausfederungen des Rads gestattet.

7. Hinterradaufhängung nach Anspruch 6, **dadurch gekennzeichnet, dass** die Hohlräume (17a) im Querschnitt jeweils die Form einer bogenförmigen Aussparung aufweisen.

8. Hinterradaufhängung nach einem der vorangehenden Ansprüche, **dadurch gekennzeichnet, dass** jeder Haltestab (6, 7) mit dem starren Querstab (4) über einen Bügel (8) verbunden ist, der fest mit dem Querstab (4) unter demselben in einer annährend senkrechten Ebene verbunden ist.

## Claims

1. Rear suspension for a motor vehicle, comprising two trailing arms (1) for supporting the rear wheels, connected to each other by a crosspiece (3) fixed to the body (C) of the vehicle by two front supports (3a1) and two rear supports (3a2), which are integral with the body (C), by flexible links (AL) and fitted to the relevant end of the crosspiece (3) to swivel around a transverse axis, **characterised by** the fact that it includes a rigid transverse bar (4) fixed rigidly at its ends to the body (C) and situated between the body (C) and the suspension; and two guide bars, which are more or less transverse (6, 7), each of which has an end fixed to the rigid transverse bar (4) by a joint and its opposite end fixed to the relevant wheel pivot (9) by a joint (AP), each guide bar (6, 7) being made so as to have a variable length according to the vertical movements of the wheel when working and when resting.

2. Rear suspension according to claim 1, **characterised by** the fact that at the end connected to the rigid transverse bar (4) each guide bar (6, 7) has two internal and external telescopic elements (6, 7a; 6b, 7b) including two fixed transverse end stops (10, 13) respectively, between which a flexible device (11) is supported, which can be compressed axially when the wheel moves vertically when working.

3. Rear suspension according to claim 2, **characterised by** the fact that the flexible device (11) is a helical compression spring.

4. Rear suspension according to claim 2, **characterised by** the fact that the flexible device (11) is a cone shaped block of rubber which is integral with the end stop of the internal telescopic element (6a, 7a).

5. Rear suspension according to one of claims 2 to 4, **characterised by** the fact that the external telescopic element (6b, 7b) of each guide bar (6, 7) is connected at the end to the rigid transverse bar (4) by the relevant joint which is flexible or ball and socket.

6. Rear suspension according to claim 1, **characterised by** the fact that the joint (AP) connecting each guide bar (6, 7) to the rigid transverse bar (4) is flexible and includes a rubber based sleeve (8) with longitudinal axis parallel to the longitudinal axis of the vehicle and with two diametrically opposed internal cavities (17a) allowing radial deformation of the sleeve (8) during vertical movements of the wheel.

7. Rear suspension according to claim 6, **characterised by** the fact that the cavities (17a) each have the shape of an arc light in cross section.

8. Rear suspension according to one of the previous claims, **characterised by** the fact that each guide bar (6, 7) is connected to the rigid transverse bar (4) by a cover (8) which is integral with the transverse bar (4) in an approximately vertical plane underneath it.
